Europäisches Patentamt

European Patent Office

Office européen des brevets

(11) Publication number: **0 456 855 A1**

# EUROPEAN PATENT APPLICATION

(21) Application number: 90109239.5

(22) Date of filing: 16.05.90

(51) Int. Cl.5: **A23L 1/304**

(43) Date of publication of application:
21.11.91 Bulletin 91/47

(84) Designated Contracting States:
AT BE CH DE DK ES FR GB GR IT LI LU NL SE

(71) Applicant: **KABUSHIKI KAISHA FUJI KIKAKU**
**59-4, Yoyogi 5-chome**
**Shibuya-ku, Tokyo(JP)**

(72) Inventor: **Yamamoto, Kozo**
**904, 26-8, Shinzaike 2-chome, Settsu-shi,**
**Osaka(JP)**

(74) Representative: **Patentanwälte Leinweber &**
**Zimmermann**
**Rosental 7/II Aufg.**
**W-8000 München 2(DE)**

(54) **Liquid food additive containing an ionizable calcium composition.**

(57) A liquid food additive having a relatively high content of calcium. The food additive is produced by mixing in water an ionizable calcium composition having an alkalinity with lactic acid. As the ionizable calcium composition, is preferably used a calcium composition which is produced by heating the powder of shells such that the powder is at least partially decomposed. Also, is preferably used lactic acid which is produced by lactic acid fermentation and purified. The food additive is effectively prepared by the steps of suspending the calcium composition powder in water; mixing the suspension with an aqueous solution of lactic acid; and stirring the mixture until the powder is completely dissolved. A processed foodstuff mixed with the food additive is disclosed.

EP 0 456 855 A1

FIELD OF THE INVENTION

The present invention relates to a food additive for promotion of health and more particularly provides: a liquid food additive having a relatively high content of calcium; a method of producing the liquid food additive; and a processed foodstuff containing the liquid food additive.

BACKGROUND OF THE INVENTION

As well known, when vitamins and/or minerals such as calcium are lacking in human body, human has difficulty in maintaining his health and tends to get ill. Particularly, the cause of diseases of adult or geriatric people has been found due to lacking of minerals such as calcium. However, it is not always easy for human to take a sufficient amount of calcium through having ordinary meals only, so that various kinds of edible calcium medicine have been developed for promotion of health as well as medical treatment.

According to a search report issued by National Institute of Resources in Prime Minister's Office of Japan, an ideal calcium amount which is to be taken for maintenance of health is suggested as shown in Table 1. Nevertheless, it has been

## Table 1

| Age | Amount of calcium (g/day) |
|---|---|
| 1 to 9 | 1.0 |
| 10 to 12 | 1.2 |
| 13 to 15 (man) | 1.4 |
| (woman) | 1.3 |
| 16 to 20 (man) | 1.4 |
| (woman) | 1.0 |
| over 20 (average weight, 56 kg) | 0.8 |
| pregnant woman (former half period) | 1.0 |
| (latter half period) | 1.5 |
| nursing mother | 2.0 |

found that in Japanese people the actual amount of calcium taken through their ordinary meals is estimated to be about 540 mg per day in average, which is considerably less than the ideally necessary amount suggested in Table 1 and too poor to keep their health. As the result, osteoporosis, tooth decay, fracture of a bone and the like have been of frequent occurrence together with diseases of adult people. Consequently, in order to prevent these diseases and bone damages, people endeavor to eat or drink foodstuffs, such as small fishes and milk, which contain only apparently a lot of calcium therein. Such betterment of meal has been, however, found to scarcely effect increasing the ingested amount of calcium to reach the ideal one as suggested in Table 1. As a result, people are compelled to fall back on taking a calcium medicine.

Toshio UENO of Kabushiki Kaisha FUJI KIKAKU in Japan has found an ionizable calcium composition which is edible and effectively absorbable by the bowels. A patent application of a method invention of producing this ionizable calcium composition has been filed and patented in Japan and U.S.A. The method invention has been disclosed in Japanese Published patent application No. 60-56795 issued December 11, 1985 and U.S. patent No. 4,684,529 issued August 4, 1987. The ionizable calcium composition produced by this method has been found to have the characteristics that its aqueous saturated solution shows a specific electric conductivity of about 10,000 micro-siemens/cm at 25 degrees Celsius, the value of which is in a range from 13 to 124 times as much as those of conventional calcium medicines, and that its absorbability by the bowels is superior to the conventional calcium medicines. As the result, in many medical institutions including university hospitals this calcium composition had been used many times for prevention and/or treatment of diseases of adult people. Also, Ranko INOUE et al. of Kabushiki Kaisha FUJI KIKAKU in Japan have studied how to improve the taste of said calcium composition and invented a new calcium medicine comprising a mixture of said calcium composition with reducing malt sugar and citric acid or with reducing malt sugar and at least one of malic acid, ascorbic acid and powder absorbing acetic acid, wherein the new calcium medicine is edible without irritating the mouth and without feeling displeasure. A patent application of this invention has been filed in Japan and published after examination (Japanese Published patent applications Nos. 1-13691 and 1-13692/1989).

In the light of the fact that conventional calcium medicines have been sold in the form of powder or a tablet and generally used to be ingested independently of meal, the inventor of this application has studied a possibility of providing a liquid food additive in which the above-mentioned ionizable calcium composition is contained in a dissolved state and at a relatively high concentration and which can be easily mixed with various kinds of foodstuff to thereby enable people to take a sufficient amount of calcium during a meal. However, the inventor met with a problem, in the early stage of his study, that when citric acid, which is a most popular edible organic acid, is used for dissolving the powder of said calcium composition being suspended in water to thereby produce an aqueous mixed solution of said calcium composition and citric acid, the resultant solution often causes a precipitate of calcium citrate and accordingly the dissolved amount of said calcium composition is too lowered to provide a liquid food additive in which calcium is contained at a relatively high concentration. The present invention has been accomplished by overcoming such problem.

## SUMMARY OF THE INVENTION

It is an object of the present invention to provide a liquid food additive in which an ionizable calcium composition is dissolved at a relatively high concentration.

It is another object of the present invention to provide a processed foodstuff in which an ionizable calcium composition is contained as an effective mineral component.

It is still another object of the present invention to provide a method of producing a liquid food additive in which an ionizable calcium composition is dissolved at a relatively high concentration.

The present invention is based on the discovery that in preparing an aqueous mixed solution of an edible organic acid and an ionizable calcium composition having an alkalinity, lactic acid is superior to the other edible organic acid in providing an aqueous mixed solution which has not only a relatively high content of calcium but also a mellow taste. That is, the aqueous mixed solution of the ionizable calcium composition and lactic acid has been found to be effective as a food additive for supplying calcium. Also the inventor has found that said aqueous solution is effectively produced by suspending powder of the ionizable calcium composition in water and then mixing an aqueous solution of lactic acid with the suspension of the powder.

According to one aspect of the present invention, there is provided a liquid food additive comprising an aqueous mixed solution of lactic acid and an ionizable calcium composition having an alkalinity.

According to another aspect of the present invention, there is provided a method of producing a liquid food additive comprising the steps of suspending in water the powder of an ionizable calcium composition having an alkalinity; mixing an aqueous solution of lactic acid with the suspension of the powder; and stirring the mixture until all the suspended powder is dissolved.

In the present invention, all the optically different kinds of lactic acid are usable, that is, any one of D-lactic acid, L-lactic acid and DL-lactic acid is useful irrespective of whether they are produced by chemical synthesis or by lactic acid fermentation. Also, the ionizable calcium composition of the present invention is an inorganic calcium composition which is able to more or less dissolve and ionize in water and thereby shows an alkalinity in water. For example, the ionizable calcium composition contains at least one of calcium oxide, calcium hydroxide and calcium carbonate. Consequently, the liquid food additive according to the present invention contains calcium lactate formed by the reaction of the alkaline calcium composition with lactic acid and also a residual amount of lactic acid or hydrolyzed products of the alkaline calcium composition.

The inventive liquid food additive is colorless and odorless and has a soft and moderate acid taste due to the lactic acid component. Also, the food additive can easily be added to or mixed with, for example, sweet stuffs such as gum, jelly and a snack cake, needles, soft drinks, ice creams, yogurts and seasonings such as mayonnaise, miso (soybean paste) and shoyu (soy sauce). In cooperation with such features, the food additive is very effective to enable human to take a sufficient amount of calcium in his body.

DESCRIPTION OF PREFERRED EMBODIMENTS

Although, as described above, any kind of lactic acid is useful for preparing the liquid food additive of the present invention, the fermentation lactic acid of L(+) type or DL type is preferably used, because these lactic acids are effective to bring a relatively mellow taste on the liquid food additive. Such effect may perhaps be attributed to some by-product which is formed during lactic acid fermentation and remained in the lactic acids even after purification.

As the ionizable calcium composition of the present invention, is preferably used the powder of a calcium composition which is produced by heating shells such that the shells are at least partially decomposed to form calcium oxide. It is more preferable to use calcium composition powder produced by the UENO's method disclosed in the aforementioned Japanese Published patent application 60-56795 and U.S. patent 4,684,529. That is, this powder is produced by heating the powder of oyster shells at a temperature from 500 to 1,200 degrees Celsius and subsequently applying a voltage to the powder heated at the temperature such that decomposition of the powder is substantially accelerated by passing electricity through the powder. The voltage to be applied to the preheated powder of oyster shells is, for example, about 6,000 volts. Due to such heat and electric discharge treatments, the calcium carbonate component of oyster shells is considerably decomposed to calcium oxide and carbon dioxide. Furthermore, it has been found that in carrying out the above production method the powder of scallops shells can be effectively used instead of that of oyster sells and that the product powder from scallop shells is superior in absorbability by the bowels.

Generally, the calcium compositions produced by thermally decomposing shells are only slightly soluble in water. For example, the solubility of the calcium composition produced by the aforementioned UENO's method is only about 0.3 g per 100 ml of water at ordinary temperature. Accordingly, for preparing the liquid food additive of the present invention, it is recommended that the calcium composition is pulverized to have a particle size of 200 to 300 mesh or more; the fine powder obtained is uniformly suspended in water; the suspension is mixed with an aqueous solution of lactic acid; and the mixture is stirred until the mixture is changed to a substantially transparent solution. In contrast to such process, when the powder is directly mixed with an aqueous lactic acid solution prepared beforehand and the mixture is stirred, the powder is less soluble in the aqueous lactic acid solution or, even if a transparent mixed solution is obtained from the mixture at a temperature higher than ordinary temperature, the mixed solution tends to cause a precipitate of calcium lactate with time after cooled to ordinary temperature, except the ratio in amount of the powder to the lactic acid used being relatively small. Accordingly, it is difficult to obtain the liquid food additive having a high content of calcium.

As indicated above, the liquid food additive comprises calcium lactate and also a residual amount of lactic acid or hydrolyzed products of an alkaline calcium composition depending upon the mixed ratio of the calcium composition to lactic acid. Such components seems to control substantially the taste of the food additive in cooperation with their concentrations. The liquid food additive is undoubtedly desired to have a high content of calcium for promotion of health as well as medical treatment. At the same time, the taste of the liquid food additive should be taken into consideration for enabling people to ingest the liquid food additive without feeling displeasure. From the results of experiments when a 90 % aqueous solution of lactic acid is used for preparing the liquid food additive, it has been found preferable that, for example, 10 to 35 ml of said lactic acid solution is mixed with 90 to 65 ml of water which suspends therein 2 to 3 g of the calcium composition. Further, it has been found best that, for example, 20 to 30 ml of said lactic acid solution is added to 80 to 70 ml of water suspending 2.3 to 2.5 g of the calcium composition. On the other hand, in the above case, when the volume ratio of said lactic acid solution to water is substantially less than 10/90, the food additive has a taste which is mere washy, and when the ratio is substantially more than 35/65, the food additive is too sour or bitter to maintain the natural or original taste of a foodstuff when the foodstuff is mixed with the food additive.

In contrast to the foregoing, when malic acid or citric acid is used, instead of lactic acid, to prepare a liquid food additive, the resultant solutions have not only a very small content of calcium but also a too acidic taste in comparison with the inventive liquid food additive.

The present invention will be described in detail with reference to the following examples.

EXAMPLE 1

2.0 g of calcium composition powder produced by the aforementioned UENO's method and having an average particle size of 200 mesh was uniformly suspended in 85 ml of water. Next, 15 ml of a 90 % aqueous solution (specific gravity = 1.22) of L(+)-lactic acid which was produced by lactic acid fermentation and purified was gradually added to the above suspension while stirring the latter. Subsequently, this mixture was agitated, for 10 min., in a thermostat being controlled at 30 degrees Celsius. The mixture changed into a transparent solution during this agitation. Then, the solution thus obtained was left as it was at ordinary temperature. The solution did not cause any precipitate therein even after 10 weeks and had a mildly acidic taste. Also, the solution was mixed with several kinds of processed foodstuffs. The processed foodstuffs scarcely lost their original or natural tastes even after mixed with the solution.

EXAMPLE 2

In EXAMPLE 1, the amount of the calcium composition powder was increased to 2.4 g, while the other experimental conditions and the procedures were unchanged. The resultant solution caused no precipitate therein even after 10 weeks and had a less acidic taste. On the other hand, when 2.5 g of the calcium composition powder was used in EXAMPLE 1, the resultant solution precipitated some amount of calcium lactate therein after 3 weeks.

EXAMPLE 3

2.5 g of calcium composition powder produced by the aforementioned UENO's method and having an average particle size of 300 mesh was uniformly suspended in 50 ml of water. Next, 30 ml of water and 20 ml of a 90 % aqueous solution of L(+)-lactic acid which was produced by lactic acid fermentation and purified was gradually added to the above suspension while stirring the latter. Subsequently, this mixture was agitated, for 10 min., in a thermostat being controlled at 30 degrees Celsius. The mixture changed into a transparent solution during this agitation. Then, the transparent solution thus obtained was left as it was at ordinary temperature. The solution did not cause any precipitate therein even after 10 weeks and had a weakly acidic and mellow taste.

EXAMPLE 4

3.0 g of calcium composition powder produced by the aforementioned UENO's method and having an average particle size of 300 mesh was uniformly suspended in 50 ml of water. Next, 32 ml of a 90 % aqueous solution (specific gravity = 1.21) of DL-lactic acid which was produced by lactic acid fermentation and purified was mixed with 30 ml of water, and this diluted aqueous solution of DL-lactic acid was gradually added to the above suspension while stirring the latter. Subsequently, this mixture was agitated, for 10 min., in a thermostat being controlled at 30 degrees Celsius. The mixture changed into a transparent solution during this agitation. Then, the transparent solution thus obtained was left as it was at ordinary temperature. The solution did not cause any precipitate therein even after 10 weeks. However, the solution showed an undesirably bitter taste, although it was somehow usable as a food additive.

EXAMPLE 5

In EXAMPLE 1, was used 10 ml of a 90 % aqueous solution of L(+)-lactic acid and 1.5 g of the calcium composition powder, while the other experimental conditions and the procedures were unchanged. The resultant mixed solution caused no precipitate even after 10 weeks. However, the solution showed an undesirably washy taste.

EXAMPLE 6

5

200 g of thick malt syrup and 200 g of granulated sugar were mixed with 100 ml of the aqueous mixed solution obtained in EXAMPLE 1. This mixture was heated at a temperature between 70 and 80 degrees Celsius until the Brix degree of the mixture reached 75 or 76, and then the mixture was cooled and left as it was at 60 degrees Celsius (Material 1). Apart from Material 1, 15 g of agar and 500 ml of water were mixed with each other. The mixture was heated at 90 degrees Celsius for 10 min.; treated to exclude bubbles contained in the agar from the mixture; further mixed with 500 g of oligosaccharide; and then heated at at a temperature between 70 and 80 degrees Celsius until the final mixture had a Brix degree of 75 to 76 (Material 2). Next, Materials 1 and 2 were sufficiently mixed with each other; poured into a mold; cooled to jell; cut to have a desired size; and then dried in a dryer at about 40 degrees Celsius until the jelly formed had a Brix degree of 82. The jelly thus dried had a weight of 13 g per its piece of 1.5 cm x 3 cm x 1.5 cm. This jelly piece had a calcium content corresponding to about 100 mg of the calcium composition used in EXAMPLE 1.

COMPARATIVE EXPERIMENT 1

0.4 g of calcium composition powder produced by the aforementioned UENO's method and having an average particle size of 300 mesh was uniformly suspended in 50 ml of water. Next, 50 ml of a 0.7 % aqueous solution of malic acid was gradually added to the above suspension while stirring the latter. Subsequently, this mixture was agitated, for 10 min., in a thermostat being controlled at 30 degrees Celsius. The mixture changed into a transparent solution during this agitation. Then, the transparent solution thus obtained was left as it was at ordinary temperature. The solution caused no precipitate therein even after 10 weeks. However, in the above experiment, when the amount of the calcium composition powder was increased to 0.5 g, the resultant solution precipitated a small amount of calcium malate at ordinary temperature.

COMPARATIVE EXPERIMENT 2

In COMPARATIVE EXPERIMENT 1, a 1.2 % aqueous solution of citric acid was used instead of the 0.7 % aqueous solution of malic acid, while the other experimental conditions and the procedures were unchanged. The resultant solution caused no precipitate even after 10 weeks. However, when the amount of the calcium composition powder was increased to 0.5 g, the resultant solution precipitated a small amount of calcium citrate at ordinary temperature.

## Claims

1. A liquid food additive comprising an aqueous mixed solution of lactic acid and an ionizable calcium composition having an alkalinity.

2. The liquid food additive according to claim 1, wherein said lactic acid comprises fermentation lactic acid.

3. The liquid food additive according to claim 1, wherein said lactic acid comprises one of the lactic acids of L(+) type and DL type.

4. The liquid food additive according to claim 1, wherein said ionizable calcium composition comprises the powder of a calcium composition which contains at least one of calcium oxide, calcium hydroxide and calcium carbonate.

5. The liquid food additive according to claim 1, wherein said ionizable calcium composition comprises the powder of a calcium composition which is produced by heating shells such that the shells are at least partially decomposed.

6. The liquid food additive according to claim 1, wherein said calcium composition comprises powder which is produced by heating one of the powders of oyster shells and scallops shells at a temperature of 500 to 1,200 degrees Celsius and subsequently applying a voltage to said powder heated at said temperature such that decomposition of said powder is accelerated by passing electricity through said powder.

6

7. The liquid food additive according to claim 1, wherein said aqueous mixed solution has a composition corresponding to that of an aqueous mixed solution made of 10 to 35 ml of a 90 % aqueous solution of lactic acid, 90 to 65 ml of water and 2 to 3 g of said ionizable calcium composition.

8. A processed foodstuff mixed with the liquid food additive according to claim 1.

9. A processed foodstuff mixed with the liquid food additive according to claim 7.

10. A method of producing a liquid food additive comprising the steps of suspending in water the powder of an ionizable calcium composition having an alkalinity; mixing an aqueous solution of lactic acid with the suspension of the powder; and stirring the mixture until all the suspended powder is dissolved.

11. The method according to claim 10, wherein said lactic acid comprises fermentation lactic acid.

12. The method according to claim 10, wherein said lactic acid comprises one of the lactic acids of L(+) type and DL type.

13. The method according to claim 10, wherein said ionizable calcium composition comprises the powder of a calcium composition which contains at least one of calcium oxide, calcium hydroxide and calcium carbonate.

14. The method according to claim 10, wherein said ionizable calcium composition powder comprises the powder of a calcium composition which is produced by heating shells such that the shells are at least partially decomposed.

15. The method according to claim 10, wherein said calcium composition powder comprises powder which is produced by heating one of the powders of oyster shells and scallops shells at a temperature of 500 to 1,200 degrees Celsius and subsequently applying a voltage to said powder heated at said temperature such that decomposition of said powder is substantially accelerated by passing electricity through said powder.

16. The method according to claim 15, wherein said calcium composition powder has an average particle size of 200 to 300 mesh.

**European Patent Office**

# EUROPEAN SEARCH REPORT

Application Number

## EP 90 10 9239

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 90, 1979 Columbus, Ohio, USA ref. no. 185216Z<br>* abstract & JP-A-54008767(H.KAJI et al.)(23.01.1979) * | 1,4-6,10, 13-16 | A 23 L 1/304 |
| X | GB-A-2 207 335  (PROCTER & GAMBLE)<br>* page 6, lines 20 - 26; claims *example 1 * | 1,4,8,10, 13 | |
| D,X | US-A-4 684 529  (T.UENO)<br>* the whole document * | 5,6,15,16 | |
| X | DERWENT - WPI ACCESS NUMBER 80-79609C (45)<br>* abstra& JP-A-55122718(MICHINOKU)(21.09.1980) * | 1,4-6,8, 10,13-16 | |
| X | Food Chemicals Codex,1981 National Academy Press,Washington,D.C.,U.S.A. pages 159-160 "Lactic Acid"<br>* "Description" and "Functional Use in Foods" * | 2,3,11-12 | |
| A | EP-A-0 323 667  (PROCTER & GAMBLE)<br>* the whole document * | 1 | |

TECHNICAL FIELDS
SEARCHED (Int. Cl.5)

A 23 L
A 61 K

The present search report has been drawn up for all claims

| Place of search | Date of completion of search | Examiner |
|---|---|---|
| The Hague | 10 January 91 | VAN MOER A.M.J. |

CATEGORY OF CITED DOCUMENTS

X : particularly relevant if taken alone
Y : particularly relevant if combined with another
  document of the same catagory
A : technological background
O : non-written disclosure
P : intermediate document
T : theory or principle underlying the invention

E : earlier patent document, but published on, or after
  the filing date
D : document cited in the application
L : document cited for other reasons

& : member of the same patent family, corresponding
  document